# EUROPEAN PATENT SPECIFICATION

(11) **EP 2 923 822 B1**
(45) Date of publication and mention of the grant of the patent: **22.08.2018**
(21) Application number: 15160096.2
(22) Date of filing: 20.03.2015
(51) Int. Cl.: B29C 65/40, B29C 65/52, B29C 65/78, D06H 5/00, A41D 27/24, A41H 43/04, B65H 37/02, B65H 37/04, B05C 5/00

(54) **CLOTH BONDING APPARATUS**
VORRICHTUNG ZUM VERBINDEN VON STOFF
APPAREIL DE LIAISON DE TISSUS

(30) Priority: 28.03.2014 JP 2014067425
(43) Date of publication of application: 30.09.2015
(73) Proprietor: Brother Kogyo Kabushiki Kaisha, Nagoya-shi, Aichi-ken 467-8561 (JP)
(72) Inventor: Iwakoshi, Hiroyasu, Nagoya-shi, Aichi 467-8562 (JP); Umeda, Kazutoshi, Nagoya-shi, Aichi 467-8562 (JP); Shibata, Itaru, Nagoya-shi, Aichi 467-8562 (JP); Minagawa, Yuichiro, Nagoya-shi, Aichi 467-8562 (JP)
(74) Representative: Prüfer & Partner mbB Patentanwälte · Rechtsanwälte

(56) References cited:
- EP-A1- 2 216 165
- US-A1- 2003 010 439

## Description

### BACKGROUND

The present invention relates to a cloth bonding apparatus.

A cloth bonding apparatus discharges a heated liquid adhesive from a nozzle and applies the adhesive to a cloth. An operator overlaps a cloth that the operator wishes to bond, with the cloth to which the adhesive has been applied. The cloth bonding apparatus clamps both the cloths and bonds the cloth to the cloth. A cloth bonding apparatus disclosed inJP 2012-136323 is provided, on a base portion, with a belt that is stretched between a roller provided below and in the vicinity of a nozzle, and a roller provided on a downstream side of the nozzle in a cloth feed direction. The cloth is arranged on the belt. The roller rotates due to the driving of a motor. The cloth bonding apparatus feeds the cloth arranged on the belt by the rotation of the roller. As a result of feeding the cloth, the cloth bonding apparatus can apply an adhesive to the cloth and can bond the cloth to the other cloth. A nozzle gap is a distance of separation between a top surface of the belt (on which the cloth is arranged) and the nozzle. The nozzle gap is important in a bonding process, and if the nozzle gap is not appropriate with respect to the cloth, the cloth bonding apparatus cannot apply the adhesive in a stable manner. When the type of the cloth changes, the cloth bonding apparatus can adjust the height of the belt in order to change the nozzle gap.

In order to perform various bonding processes, it is necessary for the cloth bonding apparatus to have a plurality of modified shapes of the base portion. The base portion of the above-described known apparatus is provided with a mechanism to adjust the height of the belt, and thus, in order to secure the operability with respect to the plurality of modified shapes, it is difficult to reduce the size of a leading end section of the base portion that includes a section that feeds the cloth.

EP 2 216 165 A1 discloses a cloth bonding apparatus according to the preamble of claim 1. Another apparatus is known from US 2003/0010439 A1.

It is an object of the present invention to provide a cloth bonding apparatus that is capable of reducing the size of a shape of a section that feeds a cloth and also accurately adjusting a nozzle gap.

A cloth bonding apparatus of the present invention includes a nozzle provided to be capable of applying an adhesive to a cloth, a first roller that is disposed on
a downstream side in a feed direction of the cloth with respect to the nozzle, and a second roller that is disposed facing the first roller on an opposite side, with respect to a feed path of the cloth, to a side on which the first roller is disposed. The first roller and the second roller clamp the cloth and feed the cloth. A characteristic of the present invention is that the cloth bonding apparatus includes a support member and a gap adjustment mechanism that have the following configurations. The support member extends in the up-down direction and the nozzle is provided on a lower end portion of the support member. The support member is configured to support the nozzle such that the nozzle is able to move between a retracted position and a close position. The retracted position is a position further to an upstream side in the feed direction of the cloth than a contact portion at which the first roller and the second roller are in contact with each other. The close position is a position further to the side of the contact portion than the retracted position. The gap adjustment mechanism is configured to move the nozzle that is in the close position via the support member. Further, the gap adjustment mechanism is configured to adjust a width of a nozzle gap. The nozzle gap is a gap between the nozzle and a facing surface, which is a surface of the second roller facing the nozzle. The gap adjustment mechanism includes a stopper and an adjustment portion. When the nozzle is in the close position, the stopper comes into contact, from the downstream side in the feed direction, with a section of the support member between an upper end portion and a lower end portion of the support member. The adjustment portion moves the stopper along parallel to the feed direction. The gap adjustment mechanism adjusts a position of the stopper. Depending on the position of the stopper, the position of the nozzle that is in the close position changes. As a result, the cloth bonding apparatus can accurately adjust the nozzle gap.

The cloth bonding apparatus may also have the following configuration. The nozzle includes discharge ports that discharge the adhesive. A direction of opening of the discharge ports is a direction that is substantially orthogonal to a direction of a tangent line to the facing surface of the second roller. The direction of opening of the discharge ports is the direction that is substantially orthogonal to the direction of the tangent line to the facing surface of the second roller. Thus, in the cloth bonding apparatus, it is difficult for an application position of the adhesive onto a bonding surface of the cloth to change, even when the nozzle gap is adjusted. As a result, by adjusting the nozzle gap in accordance with a cloth thickness, it is possible to appropriately apply the adhesive to the bonding surface of the cloth.

The cloth bonding apparatus may further include a pivotal support portion that swingably supports the support member below the upper end portion of the support member, and may be configured such that the nozzle moves between the close position and the retracted position due to the support member swinging around the pivotal support portion. As a result, the cloth bonding apparatus can move the nozzle between the close position and the retracted position using a simple structure.

The gap adjustment mechanism may include a movable portion that is connected to the upper end portion of the support member above the pivotal support portion, and a moving mechanism that moves the movable portion to the upstream side or the downstream side in the feed direction. When setting the cloth, for example, after significantly swinging the support member using the moving mechanism and positioning the nozzle in the vicinity of the contact portion, the cloth bonding apparatus finely adjusts the position of the stopper. As a result, the cloth bonding apparatus can accurately adjust the nozzle gap in accordance with the cloth thickness.

The adjustment portion may be provided with a pulse motor as a drive source. The adjustment portion is provided with the pulse motor as the drive source. As a result, the cloth bonding apparatus can accurately adjust the position of the stopper.

The cloth bonding apparatus may have the following configuration. A heater that heats the adhesive is provided inside the support member. The pulse motor is disposed to the downstream side, in the feed direction, of a contact position at which the stopper and the support member are in contact with each other. When a hot-melt type adhesive is used as the adhesive, the heater is provided in a passage of the adhesive, the passage being provided in the support member. In the cloth bonding apparatus, the adjustment portion can be provided in a position separated from the support member and thus, the motor can be caused to be distant from the heater. As a result, it is possible to inhibit the motor from failing due to heat from the heater.

A drive source of the moving mechanism may be an air cylinder. The drive source of the moving mechanism is the air cylinder. Thus, it is possible to rapidly and reliably move the support member to a predetermined position. By setting a predetermined position of the air cylinder in the vicinity of the contact portion, for example, the cloth bonding apparatus can position the nozzle rapidly in the vicinity of the contact portion.

### BRIEF DESCRIPTION OF THE DRAWINGS

Embodiments will be described below in detail with reference to the accompanying drawings in which:
FIG. 1 is a perspective view of a cloth bonding apparatus 1 to which a cloth feed mechanism 12 has been attached;
FIG. 2 is a left side view of the cloth bonding apparatus 1 to which the cloth feed mechanism 12 has been attached;
FIG. 3 is a perspective view of the cloth bonding apparatus 1, and shows the interior of a head portion 5;
FIG. 4 is a perspective drawing showing an internal structure of the cloth bonding apparatus 1;
FIG. 5 is a diagram showing positional relationships between an upper roller 18, a lower roller 13 and a nozzle 17 (when the nozzle 17 is in a close position);
FIG. 6 is a diagram showing positional relationships between the upper roller 18, the lower roller 13 and the nozzle 17 (when the nozzle 17 is in a retracted position);
FIG. 7 is an exploded perspective view of a motor mounting portion 27, a pulse motor 30 and a stopper 35;
FIG. 8 is a diagram showing a change in a nozzle gap D;
FIG. 9 is a diagram showing a change in the nozzle gap D;
FIG. 10 is an enlarged view of an area W1 shown in FIG. 8; and
FIG. 11 is a perspective view of the cloth bonding apparatus 1 to which a cloth feed mechanism 120 is attached.

### DETAILED DESCRIPTION

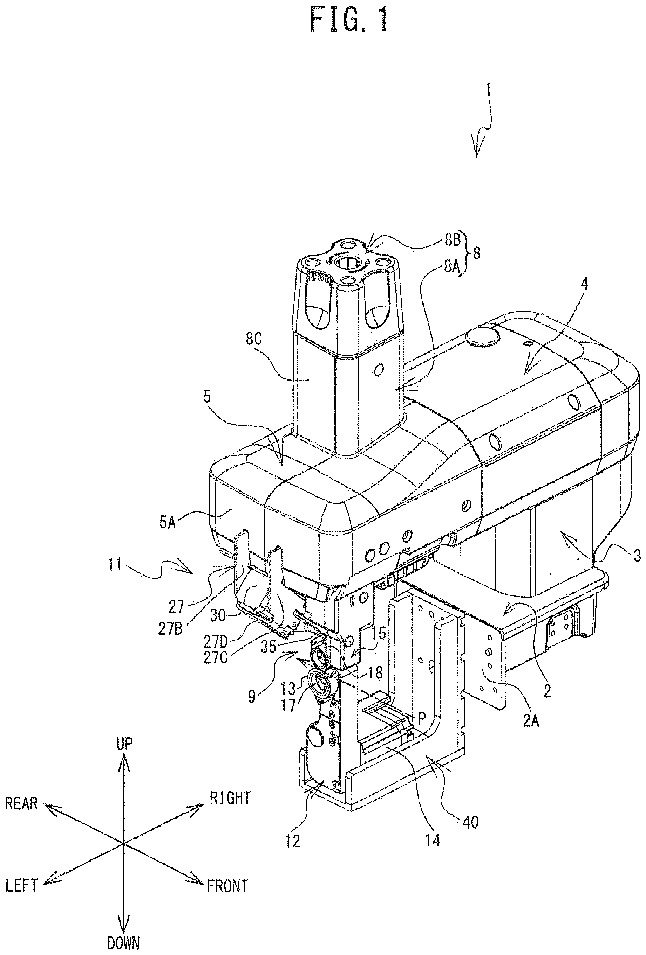

In the explanation below, the up and down, the left and right, and the front and rear shown by arrows in the drawings are used. A cloth bonding apparatus 1 shown in FIG. 1 is an apparatus that bonds two cloths using an adhesive. A cloth feed mechanism 12 of a present embodiment is a mechanism to feed the two cloths while clamping and pressing them, in a state in which the cloth feed mechanism 12 is attached to the cloth bonding apparatus 1.

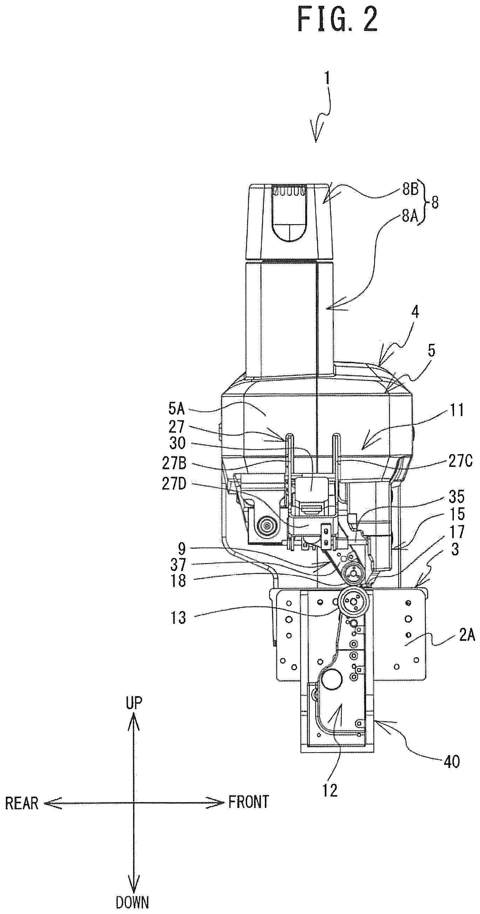

An external structure of the cloth bonding apparatus 1 will be explained with reference to FIG. 1 and FIG. 2. The cloth bonding apparatus 1 is provided with a base portion 2, a pillar portion 3, an arm portion 4, a head portion 5, a mounting member 40 and the cloth feed mechanism 12. The base portion 2 is a base of the cloth bonding apparatus 1 and has a substantially cuboid shape. A mounting surface 2A is provided on the left side surface of the base portion 2. The pillar portion 3 extends vertically upward from the right end of the base portion 2. The arm portion 4 is connected to the upper end of the pillar portion 3 and extends in the left-right direction. The left end of the arm portion 4 protrudes further to the left than the left side surface of the pillar portion 3. The head portion 5 is provided on the left end of the arm portion 4. The head portion 5 has a substantially cuboid shape. The head portion 5 protrudes further to the left from the arm portion 4. The base portion 2 is a foundation that supports the pillar portion 3. The head portion 5 has a cover 5A that can be attached to and removed from the head portion 5. The bottom surface side of the head portion 5 is provided with an upper roller 18 and a nozzle 17. The nozzle 17 applies adhesive to a cloth.

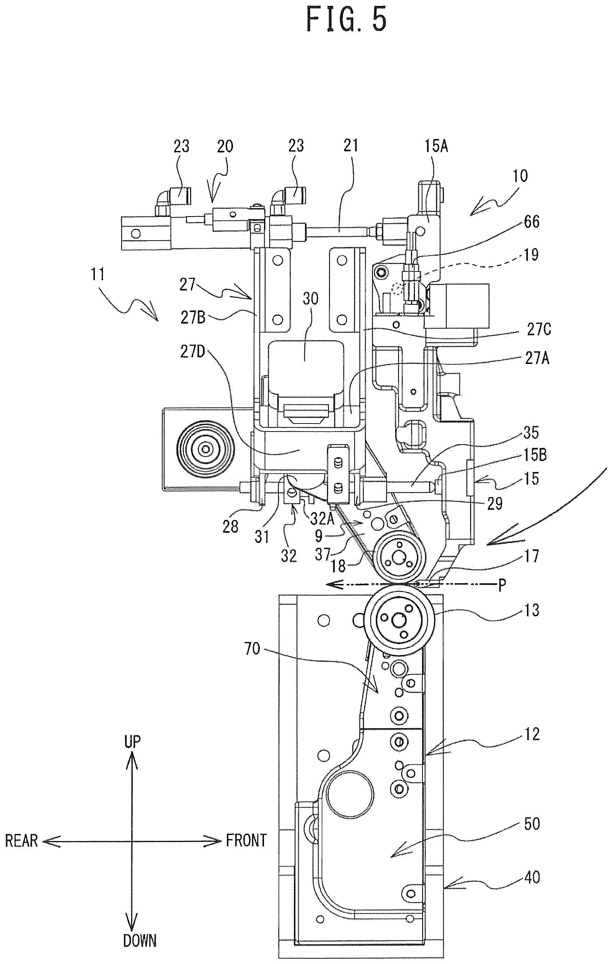

The cloth feed mechanism 12 is attached to the mounting surface 2A of the base portion 2 using the mounting member 40. The cloth feed mechanism 12 can be mounted on and removed from the mounting member 40. The mounting member 40 is a metal member that is formed substantially in a U-shape when viewed from the left side, and is formed substantially in an L shape when viewed from the front. The cloth feed mechanism 12 is formed such that a roller support portion 70 extends in the up-down direction and a lower roller 13 that is disposed facing the upper roller 18 is supported above the roller support portion 70. The cloth feed mechanism 12 is of a "column type." The cloth feed mechanism 12 has a substantially L shape when viewed from the front, and is provided with a motor drive portion 50 and the roller support portion 70 (refer to FIG. 5). The motor drive portion 50 and the roller support portion 70 can be separated from each other or joined together. The motor drive portion 50 is an assembled component that includes a lower roller motor 14. The roller support portion 70 is an assembled component that is coupled to an upper portion of the motor drive portion 50. A leading end portion of the roller support portion 70 rotatably supports the lower roller 13. As the leading end portion of the roller support portion 70 extends upward, its length in the front-rear direction gradually tapers. The cloth feed mechanism 12 is internally provided with a transmission mechanism. The transmission mechanism is a mechanism that transmits power of the lower roller motor 14 to the lower roller 13, and has, for example, a pair of pulleys and an endless belt.

The lower roller 13 faces the upper roller 18 with a cloth feed path disposed between them. The cloth feed path is a path along with the cloth passes when the cloth is being fed, and is a path that extends from the front of the cloth bonding apparatus 1 toward the rear (refer to a two-dot chain line P in FIG. 1 and FIG. 5). An axial direction of each of the upper roller 18 and the lower roller 13 is parallel to the left-right direction of the cloth bonding apparatus 1. An outer diameter of the lower roller 13 is larger than an outer diameter of the upper roller 18 (refer to FIG. 5). The cloth feed mechanism 12 drives and rotates the lower roller 13 and feeds the cloth from the front toward the rear in concert with the upper roller 18. A feed direction of the cloth (hereinafter referred to as a cloth feed direction) is a direction from the front to the rear of the cloth bonding apparatus 1 (a direction indicated by an arrow of the two-dot chain line P in FIG. 1 and FIG. 5). The nozzle 17 is positioned on an upstream side, in the cloth feed direction, of a contact portion at which the upper roller 18 and the lower roller 13 are in contact with each other (refer to FIG. 2 and FIG. 5).

The base portion 2 can be fixed into a mounting opening provided on a work table. By fixing the base portion 2 into the mounting opening, the cloth bonding apparatus 1 can be installed on the work table. The top surface of the work table is provided with an operating panel. An operator sets various operations of the cloth bonding apparatus 1 using the operating panel. A pedal is provided below the work table. The pedal is an operating device to adjust a feeding speed of the cloth.

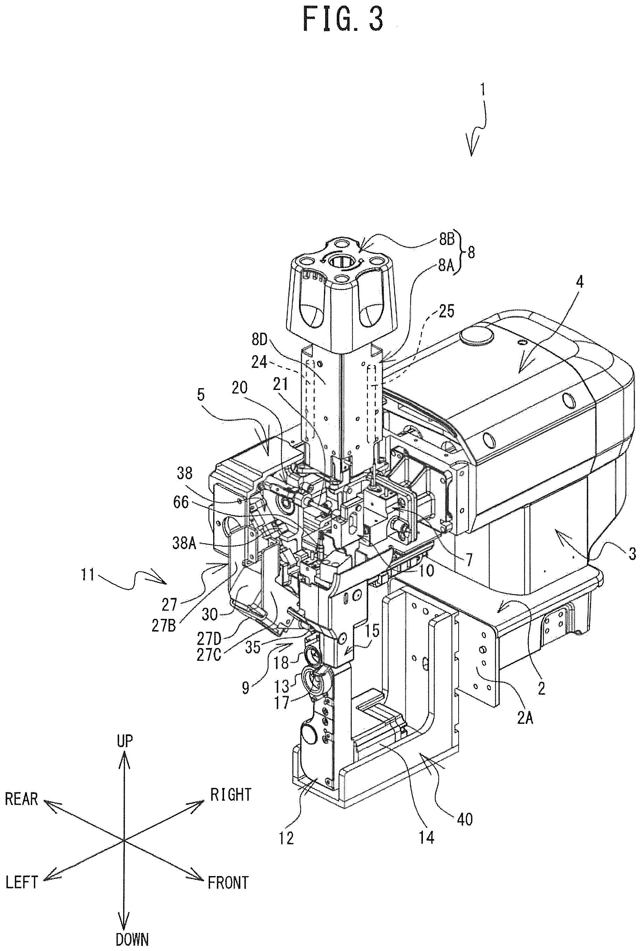

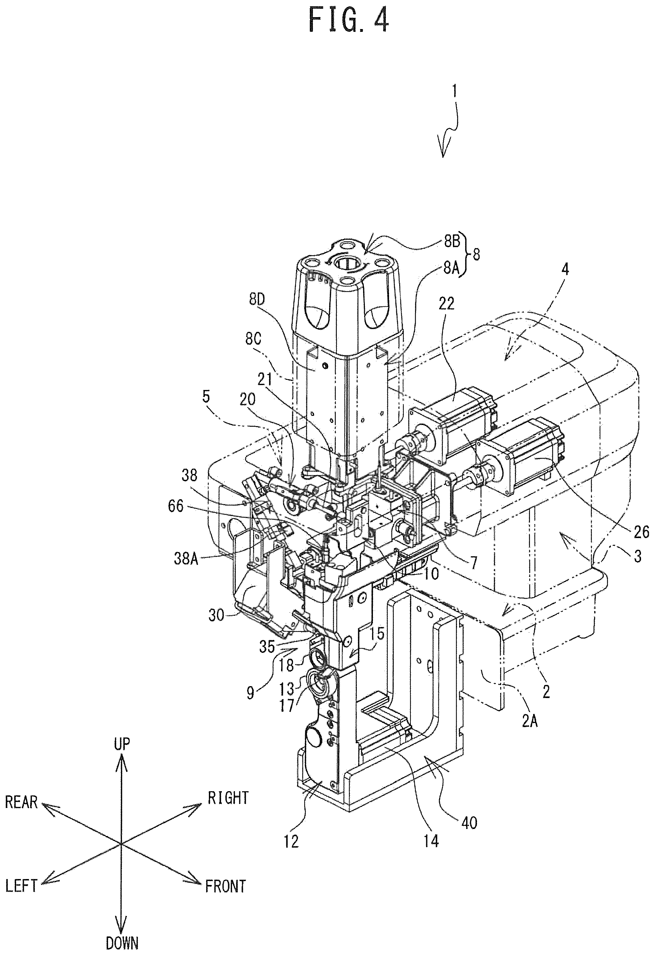

A structure of the head portion 5 and an internal structure of the cloth bonding apparatus 1 will be explained with reference to FIG. 3 to FIG. 6. As shown in FIG. 3, the head portion 5 supports a pump portion 7, a storage portion 8, an upper roller mechanism 9, a nozzle swinging mechanism 10, a nozzle gap adjustment mechanism 11 and the like. The cover 5A (refer to FIG. 1) houses the pump portion 7, the upper roller mechanism 9, the nozzle swinging mechanism 10, the nozzle gap adjustment mechanism 11 and the like, at the inside thereof. The pump portion 7 is provided to the right and the front of the head portion 5. The interior of the pump portion 7 is provided with a supply passage, a gear pump and a pump motor 26 (refer to FIG. 4) and the like. The supply passage leads the adhesive from the storage portion 8 to the gear pump. The gear pump accurately supplies an appropriate amount of the adhesive to the nozzle 17 that will be described later. As shown in FIG. 4, the pump motor 26 is provided inside the arm portion 4. The pump motor 26 drives the gear pump.

The storage portion 8 is provided to the rear of the pump portion 7. The storage portion 8 has a substantially cuboid shape and extends upward from the center of an upper surface of the head portion 5. The storage portion 8 is provided with a main body portion 8A and a lid portion 8B. The main body portion 8A is provided with a cover 8C and a storage chamber 8D. The cover 8C has a square tube shape and covers the periphery of the storage chamber 8D. The storage chamber 8D has a bottomed cylindrical shape having an upper portion opening. The storage chamber 8D stores a hot melt adhesive in a reservoir portion inside the storage chamber 8D. The storage chamber 8D supplies the adhesive stored in the reservoir portion to the nozzle 17 as required, via the gear pump. The hot melt adhesive is liquefied when it is heated to a predetermined temperature, and solidifies at a lower temperature than the predetermined temperature. The storage chamber 8D is provided with heaters 24 and 25 (refer to FIG. 3) on both sides of the reservoir portion. The heaters 24 and 25 heat the reservoir portion. The adhesive thus melts inside the reservoir portion and becomes liquid.

The lid portion 8B can be attached to and removed from an upper portion of the storage chamber 8D and opens and closes the opening of the upper portion of the storage chamber 8D. When the lid portion 8B is fixed to the upper portion of the storage chamber 8D, the operator screws on the lid portion 8B by a rotation operation. When the lid portion 8B is removed from the upper portion of the storage chamber 8D, the operator loosens the lid portion 8B by a rotation operation. A shape of the lid portion 8B and a structure for opening and closing the opening of the upper portion of the storage chamber 8D may be another format. For example, a structure may be adopted in which the storage portion 8 has a shaft portion on an end portion of the opening of the upper portion and a plate-shaped lid portion may be supported by the shaft portion such that the lid portion can be opened and closed.

The upper roller mechanism 9 is provided below the head portion 5. The upper roller mechanism 9 is provided with a support portion 37 (refer to FIG. 2 and FIG. 5), an air cylinder 38, the upper roller 18, an upper roller motor 22 (refer to FIG. 4) and the like. The support portion 37 rotatably supports the upper roller 18 below the head portion 5. The support portion 37 extends in the front-rear direction. The air cylinder 38 is provided inside the head portion 5. The air cylinder 38 is provided with an air inlet 38A. An intake and exhaust hose is connected to the air inlet 38A. The cloth bonding apparatus 1 controls the intake and exhaust of compressed air from the intake and exhaust hose to the air inlet 38A. The position of a piston that is provided inside the air cylinder 38 moves under the control of the air intake and exhaust. A movable portion is provided on a lower end portion of the piston and the movable portion is connected to an upper portion of the support portion 37. When the piston moves, the front end of the support portion 37 swings downward via the movable portion and thus maintains a state in which the upper roller 18 and the lower roller 13 are in contact with each other. As shown in FIG. 4, the upper roller motor 22 is provided inside the arm portion 4 to the right of the storage chamber 8D. The upper roller motor 22 is positioned to the rear of the pump motor 26. The power of the upper roller motor 22 is transmitted to the upper roller 18 by a plurality of pulleys and belts etc. that are provided inside the support portion 37.

As shown in FIG. 3 and FIG. 5, the nozzle swinging mechanism 10 is provided on the left side of a front portion of the head portion 5. The nozzle swinging mechanism 10 is provided with a nozzle lever 15, the nozzle 17, an air cylinder 20 and the like. The nozzle lever 15 has an arm shape and extends downward from above on the front left side of the head portion 5. The nozzle lever 15 can swing in the front-rear direction around a pivotal shaft 19. The pivotal shaft 19 is provided in a position that is slightly separated from and is below an upper end portion 15A of the nozzle lever 15. The pivotal shaft 19 extends in the left-right direction. The right end of the pivotal shaft 19 connects to the pump portion 7, and the left end of the pivotal shaft 19 supports the nozzle lever 15. The pivotal shaft 19 is internally provided with a passage for the adhesive. The nozzle lever 15 is internally provided with a supply passage for the adhesive. The passage provided inside the pivotal shaft 19 and the supply passage provided inside the nozzle lever 15 are communicatively connected with each other, and cause the adhesive supplied by the pump portion 7 to flow toward the nozzle 17. The nozzle lever 15 is provided with a rod-shaped heater 66 in the vicinity of the supply passage provided inside the nozzle lever 15. The heater 66 heats the adhesive flowing through the supply passage of the nozzle lever 15. The nozzle 17 is provided on the lower end portion of the nozzle lever 15. The nozzle 17 extends downward from the lower end portion of the nozzle lever 15, bends and extends to the right side along the cloth.

The air cylinder 20 is provided on the upper left side of the head portion 5, on the downstream side of the nozzle lever 15 in the cloth feed direction. The air cylinder 20 is provided with an air inlet 23. An intake and exhaust hose is connected to the air inlet 23. The cloth bonding apparatus 1 controls the intake and exhaust of compressed air from the intake and exhaust hose to the air inlet 23. The position of a piston that is provided inside the air cylinder 20 moves under the control of the air intake and exhaust. A rod-like movable portion 21 extends in the front-rear direction and is connected to the piston. When the piston moves, the movable portion 21 moves in the front-rear direction. As shown in FIG. 5, a leading end portion of the movable portion 21 is rotatably connected to the upper end portion 15A of the nozzle lever 15.

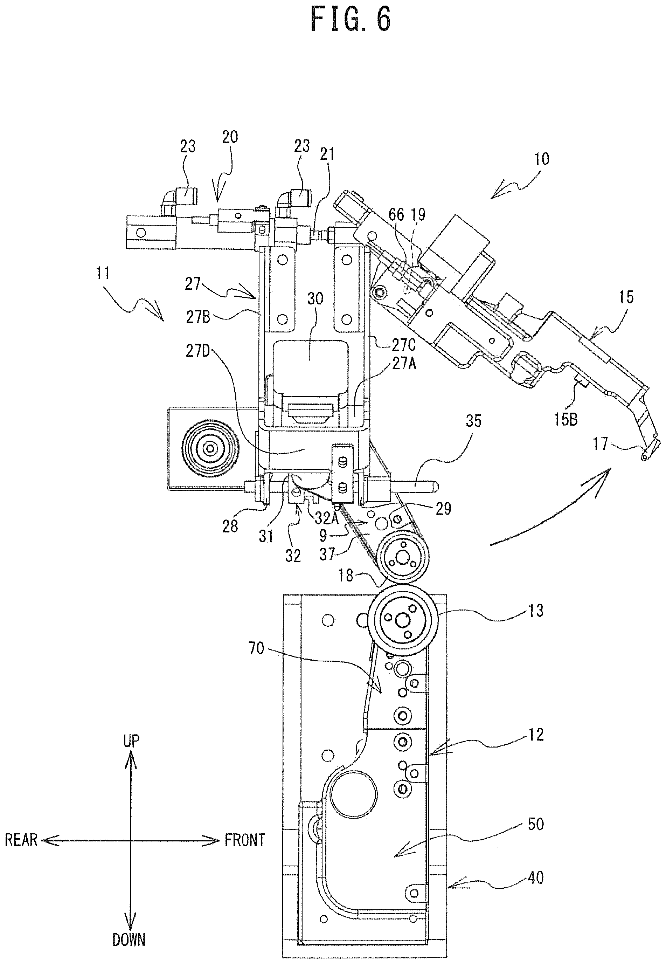

As shown in FIG. 5, when the movable portion 21 of the air cylinder 20 moves forward, the nozzle lever 15 swings significantly around the pivotal shaft 19 and the nozzle 17 moves to a close position. As shown in FIG. 6, when the movable portion 21 of the air cylinder 20 moves rearward, the nozzle lever 15 swings significantly around the pivotal shaft 19, and the nozzle 17 moves to a retracted position. The close position is a position in which the nozzle 17 approaches a contact portion of the upper roller 18 and the lower roller 13 from an upstream side in the cloth feed direction. When a cloth bonding operation is performed, the nozzle 17 moves to the close position. The retracted position is a position in which the nozzle 17 has been separated, significantly to the front, from the contact portion of the upper roller 18 and the lower roller 13. When maintenance etc. of the nozzle 17 is performed, the nozzle 17 moves to the retracted position. The cloth bonding apparatus 1 moves the nozzle 17 between the retracted position and the close position simply by causing the nozzle lever 15 to swing around the pivotal shaft 19. Thus, the cloth bonding apparatus 1 can move the nozzle 17 between the retracted position and the close position using a simple structure.

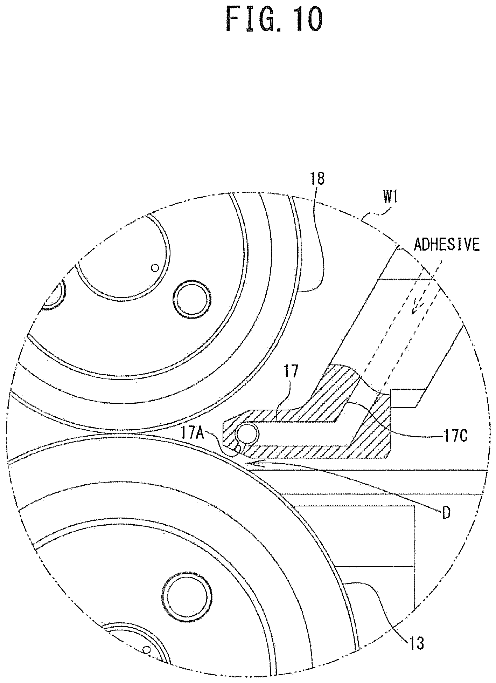

The nozzle 17 extends substantially in a rod shape in the left-right direction and a lower side of the nozzle 17 is provided with a plurality of discharge ports 17A (refer to FIG. 10). The discharge ports 17A are holes that are used to discharge the adhesive and are connected to a supply passage 17C (refer to FIG. 10). The supply passage 17C extends inside the nozzle 17 along the shape of the nozzle 17. The supply passage 17C is a passage along which the adhesive flows, in which the adhesive flows from the supply passage inside the nozzle lever 15. When the operator performs the cloth bonding operation, the cloth bonding apparatus 1 swings the nozzle lever 15 and moves the nozzle 17 to the close position. A direction of opening of the discharge ports 17A is a direction that is substantially orthogonal to a direction of a tangent line on a facing surface of the lower roller 13. The pump portion 7 supplies the adhesive to the supply passage 17C of the nozzle 17 via the supply passage inside the nozzle lever 15. The nozzle 17 discharges the adhesive from the discharge ports 17A. The adhesive attaches to a top surface of one of cloths positioned below the nozzle 17. In a state in which the other cloth is adhered to the cloth on whose top surface the adhesive has been applied, the upper roller 18 and the lower roller 13 press the two cloths and feed them toward the rear.

As shown in FIG. 2 and FIG. 3, the nozzle gap adjustment mechanism 11 is provided on the left side surface of the head portion 5. The nozzle gap adjustment mechanism 11 is provided with a motor mounting portion 27, a pulse motor 30 and a stopper 35 etc. The motor mounting portion 27 is provided with a base portion 27A (refer to FIG. 5), a pair of mounting portions 27B and 27C, and an installation portion 27D etc. The base portion 27A has a flat plate shape. The pair of mounting portions 27B and 27C are respectively plate-shaped, and stand upward from both the front and rear end portions of the base portion 27A. Screws fix upper portions of each of the mounting portions 27B and 27C to the left side surface of the head portion 5. The installation portion 27D is plate-shaped and inclines downward and to the right from its left end side. The installation portion 27D forms a connection between the mounting portions 27B and 27C. The installation portion 27D reinforces the motor mounting portion 27. The base portion 27A inclines upward and to the right from its left end side with respect to the horizontal plane (refer to FIG. 5). The pulse motor 30 is fixed to the upper surface of the base portion 27A.

As shown in FIG. 5, annular support pieces 28 and 29 are provided, respectively, on both sides in the front-rear direction of the lower surface of the base portion 27A. The support pieces 28 and 29 protrude downward. The stopper 35 is rod-shaped and extends in the front-rear direction, and is inserted through each of the support pieces 28 and 29. A front end portion of the stopper 35 is substantially spherical. The support pieces 28 and 29 support the stopper 35 such that the stopper 35 can move in the horizontal direction. An engagement portion 32 is provided substantially in the center, in the front-rear direction, of the stopper 35. The engagement portion 32 is substantially cylindrical and is positioned between the support piece 28 and the support piece 29. The engagement portion 32 is fixed to the stopper 35 in a state in which the stopper 35 is inserted into the engagement portion 32. An outer peripheral surface of the engagement portion 32 has an engagement groove 32A that is recessed toward the inside in the radial direction.

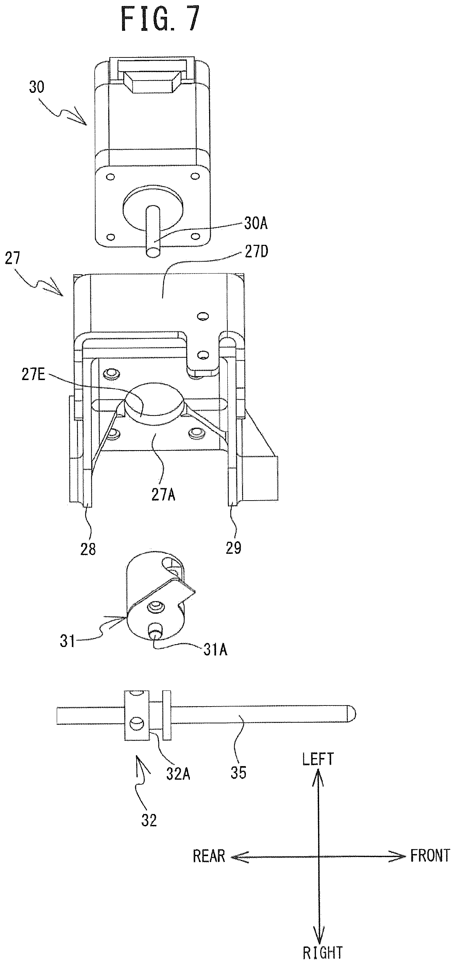

The pulse motor 30 is a known stepping motor. As shown in FIG. 7, an output shaft 30A of the pulse motor 30 penetrates through a hole 27E provided in the base portion 27A and extends toward the stopper 35. An eccentric portion 31 is attached to the leading end portion of the output shaft 30A. The eccentric portion 31 is substantially cylindrical and an axial direction of the eccentric portion 31 is the same as an axial direction of the output shaft 30A. The eccentric portion 31 is provided with an eccentric pin 31A, on a surface on the opposite side to the pulse motor 30. The eccentric pin 31A is provided in a position that is displaced, in the radial direction, from an axial center of the eccentric portion 31. The eccentric pin 31A fits into the engagement groove 32A of the engagement portion 32.

The pulse motor 30 rotates the output shaft 30A in the normal direction and the reverse direction. The eccentric portion 31 rotates integrally with the output shaft 30A. The eccentric pin 31A moves in the front-rear direction in accordance with the rotation of the eccentric portion 31. The stopper 35 moves in the front-rear direction via the engagement portion 32, in accordance with the movement of the eccentric pin 31A. When the nozzle 17 is in the close position, the front end portion of the stopper 35 comes into contact with a contact receiving portion 15B that is provided on a lower portion of the rear surface of the nozzle lever 15. The contact receiving portion 15B is a substantially cylindrical protrusion that protrudes rearward from the rear surface of the nozzle lever 15. Depending on the position of the piston of the air cylinder 20, the contact receiving portion 15B of the nozzle lever 15 urges the front end portion of the stopper 35 toward the rear. As a result, the contact receiving portion 15B and the front end portion of the stopper 35 are in contact with no gap between them.

Operations of the nozzle gap adjustment mechanism 11 will be explained with reference to FIG. 5 to FIG. 10. As shown in FIG. 5, when performing the cloth bonding operation, the cloth bonding apparatus 1 causes the movable portion 21 of the air cylinder 20 to move forward. The nozzle lever 15 swings in the clockwise direction in a left side view, around the pivotal shaft 19. The nozzle 17 moves to the close position. When the air cylinder 20 maintains the piston position, the nozzle lever 15 maintains the state of the nozzle 17 in the close position. The operator takes into account a thickness etc. of the cloths that are being bonded, and uses the operating panel to adjust a width of a nozzle gap D. The nozzle gap D is a gap between the discharge ports 17A of the nozzle 17 and the facing surface of the lower roller 13.

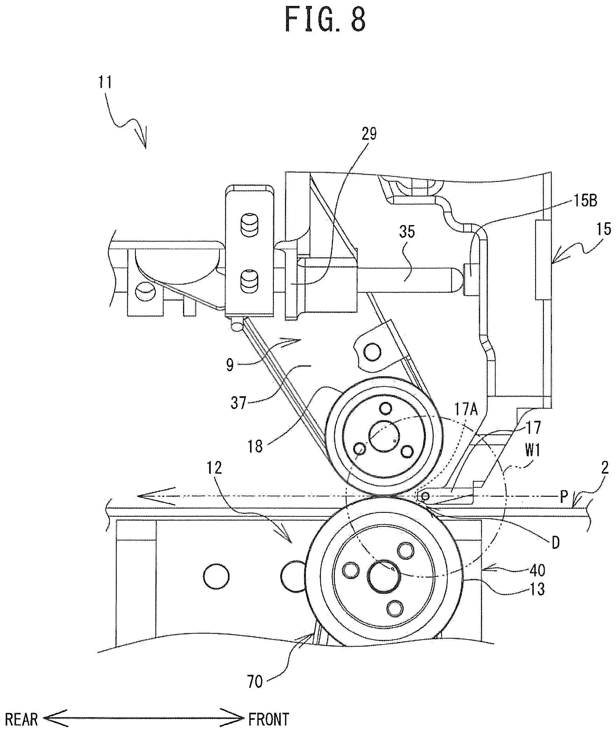

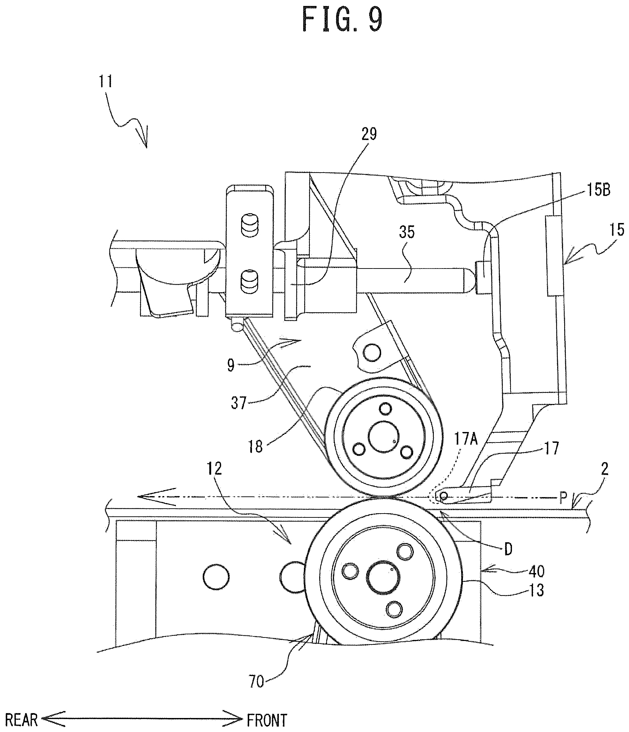

By controlling a rotation position of the output shaft 30A of the pulse motor 30, the cloth bonding apparatus 1 adjusts a position of the stopper 35 in the front-rear direction with a high degree of accuracy. The stopper 35 is in a state of being in contact with the contact receiving portion 15B of the nozzle lever 15. As shown in FIG. 9, when the stopper 35 has moved forward as a result of the driving of the pulse motor 30, the stopper 35 moves the nozzle lever 15 forward in resistance to the urging of the air cylinder 20. The nozzle 17 moves forward. As shown in FIG. 8, when the stopper 35 has moved rearward as a result of the driving of the pulse motor 30, the nozzle lever 15 moves rearward in the state of being in contact with the stopper 35, due to the urging of the air cylinder 20. The nozzle 17 moves rearward. Thus, the nozzle gap D changes in accordance with the position of the stopper 35. By adjusting the nozzle gap D in accordance with the cloth thickness, the cloth bonding apparatus 1 can appropriately apply the adhesive to a bonding surface of the cloth.

The operating panel is provided with a + direction button and a - direction button, for example. When the + direction button is depressed, the cloth bonding apparatus 1 drives the pulse motor 30 such that the nozzle 17 moves by a predetermined distance (0.1 mm, for example) to the upstream side in the feed direction. When the - direction button is depressed, the cloth bonding apparatus 1 drives the pulse motor 30 such that the nozzle 17 moves by a predetermined distance (0.1 mm, for example) to the downstream side in the feed direction. The adjustment of the nozzle gap D is particularly important in order to appropriately apply the adhesive to the cloth. The cloth bonding apparatus 1 operates the nozzle gap adjustment mechanism 11 based on information input by the operator on the operating panel.

As shown sequentially in FIG. 6 and FIG. 5, when applying the adhesive to the cloth, the cloth bonding apparatus 1 significantly swings the nozzle lever 15 using the air cylinder 20 and rapidly moves the nozzle 17 to the close position, and then minutely adjusts the position of the stopper 35 by the driving of the pulse motor 30 (refer to FIG. 8 and FIG. 9). As a result, the cloth bonding apparatus 1 can adjust the nozzle gap D both rapidly and accurately.

As shown in FIG. 2 and FIG. 5, in the cloth bonding apparatus 1, the nozzle gap adjustment mechanism 11 is not assembled to the side of the upper roller 18 or the side of the lower roller 13, but is provided in a position that is separated from the upper roller 18 and the lower roller 13. As a result, in the cloth bonding apparatus 1, it is possible to make smaller a configuration surrounding the upper roller 18 and a configuration surrounding the lower roller 13, and a section that feeds the cloth can be made smaller. With the cloth bonding apparatus 1, it is therefore possible to clamp cloths of various shapes between the upper roller 18 and the lower roller 13, and it is possible to bond cloths that form a variety of shapes after bonding.

The pulse motor 30 is positioned further to the downstream side in the cloth feed direction than a contact position between the stopper 35 and the nozzle lever 15. Thus, the cloth bonding apparatus 1 can cause the pulse motor 30 to be distant from the nozzle lever 15. As described above, the heater 66 is provided in the vicinity of the supply passage inside the nozzle lever 15. Thus, in the cloth bonding apparatus 1, it is possible to avoid breakdown of the pulse motor 30 resulting from the heat of the heater 66.

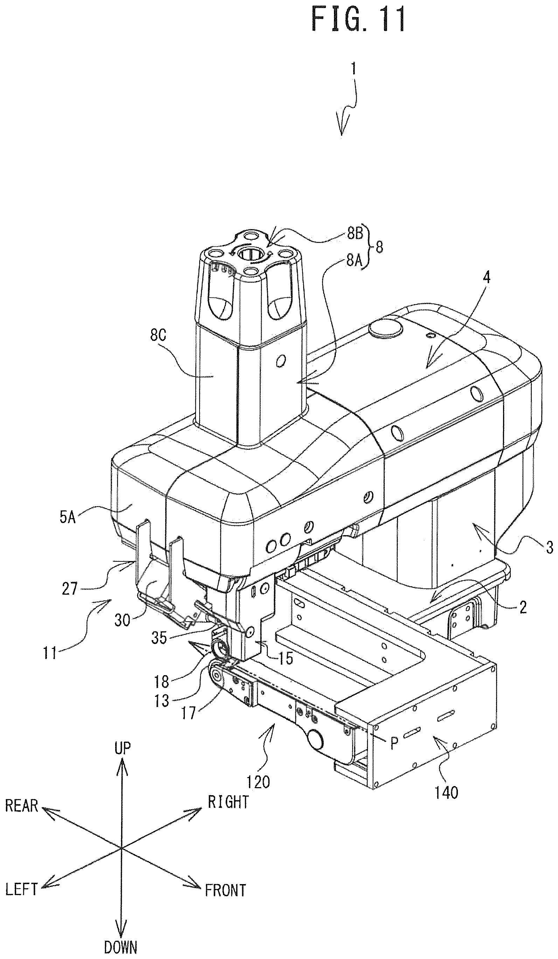

As shown in FIG. 11, in the cloth bonding apparatus 1, in place of the cloth feed mechanism 12 shown in FIG. 1, a cloth feed mechanism 120 can also be attached to the mounting surface 2A (refer to FIG. 1) of the base portion 2. The cloth feed mechanism 120 is a so-called "arm type" in which a roller support portion 170 extends in the front-rear direction and the roller support portion 170 supports the lower roller 13, which is disposed facing the upper roller 18, substantially horizontally from the upstream side in the cloth feed direction. The arm type cloth feed mechanism 120 is used when, for example, the cloths that will form a cylindrical shape after they are bonded together are bonded while the cloths are being fed substantially in the horizontal direction. The cloth feed mechanism 120 can be attached by screws to the mounting surface 2A via a mounting member 140. The cloth feed mechanism 120 is formed substantially in an L shape in a plan view. A configuration of the cloth feed mechanism 120 is the same as that of the cloth feed mechanism 12 of the above-described embodiment, and only its orientation is different. An explanation thereof is therefore omitted here. In a similar manner to the mounting member 40 shown in FIG. 1, the mounting member 140 is a metal member that is formed substantially in a U shape when viewed from the left side in FIG. 11, and is formed substantially in an L shape in a plan view. A configuration of the mounting member 140 is the same as that of the mounting member 40 of the above-described embodiment and only its orientation is different. An explanation thereof is therefore omitted here.

Also in the mode in which the arm type cloth feed mechanism 120 is attached, the cloth bonding apparatus 1 can adjust the nozzle gap D accurately, by driving the nozzle gap adjustment mechanism 11. Furthermore, the cloth bonding apparatus 1 may be configured such that a cloth feed mechanism other than the column type and the arm type can be attached. For example, the cloth bonding apparatus 1 may be configured such that a cloth feed mechanism that supports the lower roller 13 in a diagonal direction can be attached, or may be configured such that a cloth feed mechanism that can adjust an angle of support of the lower roller 13 can be attached.

In the above explanation, the upper roller 18 corresponds to a "first roller" of the present invention. The lower roller 13 corresponds to a "second roller" of the present invention. The nozzle lever 15 corresponds to a support member of the present invention. The nozzle swinging mechanism 10 and the nozzle gap adjustment mechanism 11 correspond to a gap adjustment mechanism of the present invention. The pivotal shaft 19 corresponds to a pivotal support portion of the present invention. The pulse motor 30, the eccentric portion 31 and the engagement portion 32 correspond to an adjustment portion of the present invention. The heater 66 corresponds to a heater of the present invention.

As described above, the cloth bonding apparatus 1 of the present embodiment is provided with the nozzle 17, the upper roller 18 and the lower roller 13. The nozzle 17 applies the adhesive to the cloth. The upper roller 18 is disposed on the downstream side in the cloth feed direction with respect to the nozzle 17. The lower roller 13 is disposed facing the upper roller 18, on the opposite side to the upper roller 18 with respect to the cloth feed path. The upper roller 18 and the lower roller 13 work in concert to clamp and feed the cloths. The cloth bonding apparatus 1 is further provided with the nozzle lever 15 and the nozzle gap adjustment mechanism 11. The nozzle lever 15 supports the nozzle 17 such that the nozzle 17 can move in the cloth feed direction from a position on the upstream side in the cloth feed direction toward the side of the contact portion of the upper roller 18 and the lower roller 13. The nozzle gap adjustment mechanism 11 is provided with the pulse motor 30 and the stopper 35. The stopper 35 moves parallel to the cloth feed direction in accordance with the driving of the pulse motor 30. The leading end portion of the stopper 35 comes into contact with the contact receiving portion 15B of the nozzle lever 15. By controlling the rotation position of the output shaft 30A of the pulse motor 30, the cloth bonding apparatus 1 can adjust the position of the stopper 35. The operator adjusts the position of the stopper 35 in accordance with the cloth thickness and thus adjusts the nozzle gap D with a high degree of accuracy. As a result, the cloth bonding apparatus 1 can appropriately apply the adhesive to the cloth.

The direction of opening of the discharge ports 17A of the nozzle 17 is a direction that is substantially orthogonal to the direction of the tangent line on the facing surface of the lower roller 13. As a result, in the cloth bonding apparatus 1, it is difficult for an application position of the adhesive onto the bonding surface of the cloth to change, even when the nozzle gap D is adjusted. Thus, by adjusting the nozzle gap D in accordance with the cloth thickness, the cloth bonding apparatus 1 can appropriately apply the adhesive to the bonding surface of the cloth.

In the cloth bonding apparatus 1, the nozzle gap adjustment mechanism 11 is provided in a different position to the upper roller 18 and the lower roller 13, and it is thus possible to make smaller the configuration surrounding the upper roller 18 and the lower roller 13. As a result, the cloth bonding apparatus 1 can clamp a variety of cloths having different thicknesses and can therefore appropriately feed the cloths.

In addition to the above-described embodiment, various modifications can be made to the present invention. The nozzle gap adjustment mechanism 11 of the above-described embodiment is provided with the pulse motor 30, but the type of the motor may be another type. It is preferable that the type of the motor be a motor that is capable of stepping drive. For example, the type of the motor may be a brushed DC motor, a brushless DC motor (BLDC), a universal motor, a single-phase AC motor, a three-phase asynchronous motor, a three-phase synchronous AC motor, a switched reluctance (SR) motor or the like. In the case of a motor that is not capable of stepping drive, a mechanism may be added that can position an output shaft of the motor at each of a predetermined angle.

The nozzle swinging mechanism 10 of the above-described embodiment moves the nozzle 17 between the retracted position and the close position, using the driving of the air cylinder 20. However, the air cylinder 20 can be omitted. In this case, if a mechanism that urges the nozzle 17 to the close position is provided, the nozzle gap adjustment mechanism 11 can adjust the position of the nozzle 17 with a high degree of accuracy.

In the above-described embodiment, the nozzle lever 15 can move the nozzle 17 by the nozzle lever 15 swinging around the pivotal shaft 19. A movement mechanism of the nozzle 17 may be a mechanism, for example, that causes a support member supporting the nozzle 17 to move in parallel along the cloth feed path.

In the above-described embodiment, the upper roller 18 and the lower roller 13 are aligned and face each other in the up-down direction, but an orientation in which they face each other is not limited to the up-down direction and may be diagonally tilted.

In the above-described embodiment, the cloth feed mechanisms 12 and 120 are attached to the mounting surface 2A of the cloth bonding apparatus 1 via the mounting members 40 and 140. The present invention is not limited to the above-described embodiment, and the cloth feed mechanisms 12 and 120 may be directly attached to the mounting surface 2A of the cloth bonding apparatus 1. The cloth feed mechanisms 12 and 120 may be fixed to the mounting surface 2A such that they are not detachable.

In the above-described embodiment, the outer diameter of the lower roller 13 is larger than the outer diameter of the upper roller 18, but the diameters may be the same, or the outer diameter of the lower roller 13 may be smaller than the outer diameter of the upper roller 18.

In the above-described embodiment, the heater 66 is provided in the vicinity of the supply passage inside the nozzle lever 15, but a number of heaters is not limited to one, and two or more heaters may be provided. It is sufficient if the position of the heater 66 is in the vicinity of the supply passage inside the nozzle lever 15, and the heater 66 may be on the lower end side of the nozzle lever 15. If the adhesive is not the hot melt adhesive, the heater need not be provided.

## Claims

1. A cloth bonding apparatus (1) comprising:
a nozzle (17) provided to be capable of applying an adhesive to a cloth;
a first roller (18) that is disposed on a downstream side in a feed direction of the cloth with respect to the nozzle;
a second roller (13) that is disposed facing the first roller on an opposite side, with respect to a feed path of the cloth, to a side on which the first roller is disposed, and clamps the cloth between the first roller and the second roller and feeds the cloth in concert with the first feed roller; and
a support member (15) which extends in an up-down direction, a lower end portion of which is provided with the nozzle, and which supports the nozzle such that the nozzle is able to move between a retracted position and a close position, the retracted position being further to an upstream side in the feed direction of the cloth than a contact portion at which the first roller and the second roller are in contact with each other, and the close position being further to the side of the contact portion than the retracted position,
**characterized by**
a gap adjustment mechanism (10, 11) that moves the nozzle that is in the close position, via the support member, and adjusts a width of a nozzle gap that is a gap between the nozzle and a facing surface, which is a surface of the second roller facing the nozzle;
wherein
the gap adjustment mechanism includes
a stopper (35) that comes into contact, from the downstream side in the feed direction, with a section of the support member between an upper end portion and a lower end portion of the support member, when the nozzle is in the close position, and
an adjustment portion (30, 31, 32) that moves the stopper along the feed direction.

2. The cloth bonding apparatus according to claim 1, wherein
the nozzle includes discharge ports (17A) that discharge the adhesive, and
a direction of opening of the discharge ports is substantially orthogonal to a direction of a tangent line on the facing surface of the second roller.

3. The cloth bonding apparatus according to claim 1 or 2, further comprising:
a pivotal support portion (19) that swingably supports the support member below the upper end portion of the support member; wherein
the nozzle moves between the close position and the retracted position due to the support member swinging around the pivotal support portion.

4. The cloth bonding apparatus according to claim 3, wherein
the gap adjustment mechanism includes
a movable portion (21) that is connected to the upper end portion of the support member above the pivotal support portion, and
a moving mechanism (20) that moves the movable portion to the upstream side or the downstream side in the feed direction.

5. The cloth bonding apparatus according to any one of claims 1 to 4, wherein
the adjustment portion is provided with a pulse motor (30) as a drive source.

6. The cloth bonding apparatus according to claim 5, further comprising:
a heater (66) that heats the adhesive is provided inside the support member; wherein
the pulse motor is disposed to the downstream side, in the feed direction, of a contact position at which the stopper and the support member are in contact with each other.

7. The cloth bonding apparatus according to claim 4, wherein
a drive source of the moving mechanism is an air cylinder.

## Patentansprüche

1. Vorrichtung zum Verbinden von Stoff (1), umfassend:
eine Düse (17), die vorgesehen ist, einen Klebstoff auf einen Stoff aufzubringen;
eine erste Rolle (18), die auf einer stromabwärtigen Seite in einer Zuführrichtung des Stoffs in Bezug auf die Düse angeordnet ist;
eine zweite Rolle (13), die der ersten Rolle zugewandt an einer in Bezug auf die Zuführbahn des Stoffs gegenüberliegenden Seite an einer Stelle angeordnet ist, auf der die erste Rolle angeordnet ist, und den Stoff zwischen die erste Rolle und die zweite Rolle klemmt, und den Stoff zusammen mit der ersten Rolle zuführt; und
ein Stützelement (15), das sich in einer Aufwärts-Abwärts-Richtung erstreckt, wobei ein unterer Endabschnitt mit der Düse versehen ist, und welcher die Düse derart stützt, so dass sich die Düse zwischen einer zurückgezogenen Position und einer geschlossenen Position bewegen kann, die zurückgezogene Position weiter ist zu einer stromaufwärtigen Seite in der Zuführrichtung des Stoffs als ein Kontaktabschnitt, an welchem die erste Rolle und die zweite Rolle in Kontakt miteinander sind, und die geschlossene Position weiter ist zu der Stelle des Kontaktabschnitts als die zurückgezogene Position,
**gekennzeichnet durch**
einen Spalteinstellmechanismus (10, 11), der die Düse, die sich in der geschlossenen Position befindet, über das Stützelement bewegt, und eine Breite eines Düsenspalts einstellt, welche die Breite ist zwischen der Düse und einer zugewandten Oberfläche, welche eine der Düse zugewandten Oberfläche der zweiten Rolle ist;
wobei
der Spalteinstellmechanismus mit einschließt
einen Anschlag (35), der von der stromabwärtigen Seite in der Zuführrichtung in Kontakt kommt mit einem Abschnitt des Stützelements zwischen einem oberen Endabschnitt und einem unteren Endabschnitt des Stützelements, wenn die Düse in der geschlossenen Position ist, und
einen Einstellabschnitt (30, 31, 32), der den Stopper entlang der Zuführrichtung bewegt.

2. Vorrichtung zum Verbinden von Stoff gemäß Anspruch 1, wobei die Düse Ausstoßöffnungen (17A) aufweist, die den Klebstoff ausstoßen, und eine Öffnungsrichtung der Ausstoßöffnungen im Wesentlichen orthogonal zu einer Richtung einer Tangentenlinie auf die zugewandte Oberfläche der zweiten Rolle ist.

3. Vorrichtung zum Verbinden von Stoff gemäß Anspruch 1 oder 2, ferner umfassend:
einen schwenkbaren Stützabschnitt (19), der das Stützelement unterhalb des oberen Endabschnitts des Stützelements schwenkbar trägt; wobei
sich die Düse zwischen der geschlossenen Position und der zurückgezogenen Position bewegt, weil das Stützelement um den schwenkbaren Stützabschnitt schwingt.

4. Vorrichtung zum Verbinden von Stoff gemäß Anspruch 3, wobei
der Spalteinstellmechanismus umfasst
einen beweglichen Abschnitt (21), der mit dem oberen Endabschnitt des Stützelements über dem schwenkbaren Stützabschnitt verbunden ist, und
einen Bewegungsmechanismus (20), der den bewegbaren Abschnitt in der Zuführrichtung zu der stromaufwärtigen Seite oder der stromabwärtigen Seite bewegt.

5. Vorrichtung zum Verbinden von Stoff gemäß irgendeinem der Ansprüche 1 bis 4, wobei der Einstellabschnitt versehen ist mit einem Schrittmotor (30) als Antriebsquelle.

6. Vorrichtung zum Verbinden von Stoff gemäß Anspruch 5, ferner umfassend:
eine Heizung (66), die den Klebstoff erwärmt, die vorgesehen ist innerhalb des Stützelements; wobei der Schrittmotor an der stromabwärtigen Seite angeordnet ist, in der Zuführrichtung einer Kontaktposition, an der der Anschlag und das Stützelement in Kontakt miteinander sind.

7. Vorrichtung zum Verbinden von Stoff gemäß Anspruch 4, wobei eine Antriebsquelle des Bewegungsmechanismus' ein Luftzylinder ist.

## Revendications

1. Appareil de liaison d'étoffe (1) comprenant :
une buse (17) prévue pour être capable d'appliquer un adhésif à une étoffe ;
un premier rouleau (18) qui est disposé sur un côté aval dans une direction de fourniture de l'étoffe par rapport à la buse ;
un second rouleau (13) qui est disposé en regard du premier rouleau sur un côté opposé, par rapport à un trajet de fourniture de l'étoffe, à un côté sur lequel le premier rouleau est disposé, et serre l'étoffe entre le premier rouleau et le second rouleau et fournit l'étoffe de concert avec le premier rouleau de fourniture ; et
un organe de support (15) qui s'étend dans une direction de haut en bas, dont une portion d'extrémité inférieure est pourvue de la buse, et qui supporte la buse de sorte que la buse soit capable de se déplacer entre une position rétractée et une position fermée, la position rétractée étant davantage vers un côté amont de la direction de fourniture de l'étoffe qu'une portion de contact au niveau de laquelle le premier rouleau et le second rouleau sont en contact l'un avec l'autre, et la position fermée étant davantage vers le côté de la portion de contact que la position rétractée,
**caractérisé par**
un mécanisme d'ajustement d'écartement (10, 11) qui déplace la buse qui est dans la position fermée, via l'organe de support, et ajuste une largeur d'un écartement de buse qui est un écartement entre la buse et une surface en regard, qui est une surface du second rouleau en regard de la buse ;
dans lequel
le mécanisme d'ajustement d'écartement comporte
une butée (35) qui vient en contact, depuis le côté aval dans la direction de fourniture, avec une section de l'organe de support entre une portion d'extrémité supérieure et une portion d'extrémité inférieure de l'organe de support lorsque la buse est dans la position fermée, et
une portion d'ajustement (30, 31, 32) qui déplace la butée le long de la direction de fourniture.

2. Appareil de liaison d'étoffe selon la revendication 1, dans lequel
la buse comporte des orifices de sortie (17A) qui font sortir l'adhésif, et
une direction d'ouverture des orifices de sortie est sensiblement orthogonale à une direction d'une droite tangente sur la surface en regard du second rouleau.

3. Appareil de liaison d'étoffe selon la revendication 1 ou 2, comprenant en outre :
une portion de support pivotante (19) qui supporte en oscillation l'organe de support en dessous de la portion d'extrémité supérieure de l'organe de support ; dans lequel
la buse se déplace entre la position fermée et la position rétractée en raison de l'oscillation de l'organe de support autour de la portion de support pivotante.

4. Appareil de liaison d'étoffe selon la revendication 3, dans lequel
le mécanisme d'ajustement d'écartement comporte
une portion mobile (21) qui est raccordée à la portion d'extrémité supérieure de l'organe de support au-dessus de la portion de support pivotante, et
un mécanisme de déplacement (20) qui déplace la portion mobile jusqu'au côté amont ou jusqu'au côté aval dans la direction de fourniture.

5. Appareil de liaison d'étoffe selon l'une quelconque des revendications 1 à 4, dans lequel
la portion d'ajustement est pourvue d'un moteur à impulsions (30) en tant que source d'entraînement.

6. Appareil de liaison d'étoffe selon la revendication 5, comprenant en outre :
un élément chauffant (66) qui chauffe l'adhésif est prévu à l'intérieur de l'organe de support ; dans lequel
le moteur à impulsions est disposé sur le côté aval, dans la direction de fourniture, d'une position de contact à laquelle la butée et l'organe de support sont en contact l'un avec l'autre.

7. Appareil de liaison d'étoffe selon la revendication 4, dans lequel
une source d'entraînement du mécanisme de déplacement est un vérin pneumatique.
